# EUROPÄISCHE PATENTSCHRIFT

(11) **EP 0 743 348 B1**
(45) Veröffentlichungstag und Bekanntmachung des Hinweises auf die Patenterteilung: **08.12.1999**
(21) Anmeldenummer: 95107527.4
(22) Anmeldetag: 18.05.1995
(51) Int. Cl.: C09K 3/10, B65D 53/04

(54) **Schraubdeckeldichtung für luftdicht verpackte Erzeugnisse, insbesondere Lebensmittel, sowie Verfahren zur Herstellung der Schraubdeckeldichtung**
Screw cap gasket for airtight packed products, especially food, and process for its production
Joint de couvercles filetés pour produits emballés fermés hermétiquement, spécialement pour produits alimentaires, et méthode pour sa production

(43) Veröffentlichungstag der Anmeldung: 20.11.1996
(73) Patentinhaber: ERNST SONDERHOFF GmbH & Co. KG, D-50829 Köln (DE)
(72) Erfinder: Giesen, Franz-Josef, D-50935 Köln (DE)
(74) Vertreter: Hennicke, Ernst Rüdiger,Dipl.-Ing.

(56) Entgegenhaltungen:
- EP-A- 0 129 309
- EP-A- 0 165 724
- EP-A- 0 220 997
- EP-A- 0 416 229
- EP-A- 0 519 863
- DE-A- 4 217 254

## Beschreibung

Die Erfindung betrifft eine Schraubdeckeldichtung für luftdicht verpackte Erzeugnisse, insbesondere Lebensmittel, bestehend aus einer einen Füllstoff enthaltenden, durch den Schließdruck des Schraubdeckels elastisch verformbaren Kunststoffdichtung. Ferner ist die Erfindung auf Verfahren zur Herstellung solcher Schraubdeckeldichtungen gerichtet.

Insbesondere in der Lebensmittelindustrie werden für die Verpakkung der Erzeugnisse Verpackungsbehälter, wie Gläser, Flaschen, Dosen u.dgl., verwendet, die mit einem Schraubdeckelverschluß, d.h. einem sogenannten Twist-Off-Deckelverschluß, versehen sind. Dabei besteht im Regelfall, vor allem bei vakuum-verpackten Lebensmitteln, die Forderung, daß der Schraubdeckelverschluß über einen längeren Zeitraum von einigen Jahren luftdicht ist, d.h. das Füllgut bei verschlossenem Verpackungsbehälter steril verpackt bleibt.

Es ist seit langem bekannt und allgemein üblich, für die Schraubdeckelverschlüsse (Twist-Off-Deckelverschlüsse) PVC-Dichtungen zu verwenden, die den von der Verpackungsindustrie im Hinblick auf die Langzeithaltbarkeit der Verpackungsgüter gestellten Dichtigkeitsanforderungen durchaus genügen und daher in der Lage sind, bei vakuum-verpackten Erzeugnissen den Abbau des Vakuums durch Lufteintritt in den geschlossenen Verpackungsbehälter auch über mehrere Jahre zu verhindern. Diese Standard-Deckeldichtungen konnten bisher nicht durch zumindest gleichwertige Dichtungen ersetzt werden, obwohl PVC-Kunststoffe schon seit längerer Zeit toxikologisch auf Bedenken stoßen und ihre ökologisch einwandfreie Entsorgung bekanntlich problematisch ist.

Aus der EP-A-0 416 229 sind bereits Silikondichtungen bekannt, die einen als Quarzmehl ausgebildeten anorganischen Füllstoff als Streckmittel aufweisen. Diese Silikondichtungen sind jedoch für Deckel- und Gehäusedichtungen von technischen Geräten bestimmt, so daß sie in dieser Form für Schraubendeckeldichtungen nicht geeignet sind.

Es ist daher Aufgabe der Erfindung, für Schraubdeckelverschlüsse, insbesondere die gebräuchlichen Twist-Off-Deckelverschlüsse, eine verbesserte Dichtung zu schaffen, die den hohen Dichtungsanforderungen vor allem bei steril verpackten Lebensmitteln oder auch bei sonstigen Erzeugnissen genügt, dabei aber toxikologisch unbedenklich und auch ökologisch unproblematisch ist (frei von Halogenen). Ferner ist die Erfindung auf in dieser Hinsicht vorteilhafte Verfahren zur Herstellung solcher hochwertiger Schraubdeckeldichtungen gerichtet.

Die vorgenannte Aufgabe wird erfindungsgemäß dadurch gelöst, daß die Schraubdeckeldichtung aus einer elastomeren Silikondichtung besteht, die die im kennzeichnenden Teil des Patentanspruchs 1 offenbarten Merkmale aufweist.

Die erfindungsgemäß für die Schraubdeckeldichtung verwendete elastomere Silikondichtung ist nicht nur toxikologisch unbedenklich, da frei von Halogenen, in ihrer Entsorgung umweltverträglich, sondern sie zeichnet sich auch wegen ihres hohen elastischen Rückstellvermögens wie auch aufgrund ihrer chemischen Beständigkeit durch hohe Funktionssicherheit aus. Es konnte gefunden werden, daß durch einen spezifischen Füllstoffzusatz die Silikondichtung in ihren Dichteigenschaften erheblich verbessert werden kann, so daß sie sich für die geforderte sterile Verpakkung von Erzeugnissen, wie insbesondere vakuum-verpackten Lebensmitteln, bestens eignet und daher den gestellten Forderungen an die Langzeithaltbarkeit der abgepackten Erzeugnisse voll genügt. Die Füllstoffe sind dabei nach ihrer Art und/oder in ihren Mengenanteilen so eingestellt, daß sie bei der elastischen Druckverformung der Silikondichtung, die sich beim Auf- und Festschrauben des Schraubdeckels auf den gefüllten Verpackungsbehälter einstellt, in dem Silikonmaterial quasi eine den Luftdurchtritt sperrende Barriere bilden. Durch die Druckverformung der Silikondichtung im Schließzustand des Schraubdeckels werden die organischen Gleitfüllstoffe, die in pulvriger oder etwa wachsartiger Form zugesetzt werden, in Druckrichtung verformt und quer zur Druckrichtung unter Bildung der Barriere bzw. Sperrschicht gestreckt bzw. flächig gepreßt. Andererseits ermöglicht der verwendete organische Gleitfüllstoff aufgrund seiner guten Gleiteigenschaft ein verhältnismäßig leichtes Lösen des Schraubdeckelverschlusses bei vakuum-verpackten Lebensmitteln oder sonstigen Erzeugnissen.

Wie erwähnt, wird als Füllstoff bei der erfindungsgemäßen Schraubdeckeldichtung auch ein anorganischer bzw. mineralischer Füllstoff mit etwa plättchenförmiger Struktur verwendet werden, vorzugsweise Glimmer (z.B. Muskovit), da dieser bei der Druckverformung der Dichtung aufgrund seiner blattförmigen Struktur die genannte Barriere bzw. Sperrschicht in der Silikondichtung ausbildet.

Es hat sich gezeigt, daß vor allem im Hinblick auf die geforderten guten Dichtungseigenschaften der Silikondichtung besondere Vorteile erreicht werden können, wenn diese sowohl den genannten organischen Gleitfüllstoff als auch einen feinpulvrigen anorganischen Füllstoff, insbesondere Glimmer enthält, da in diesem Fall die für die Dichtungseigenschaft wichtige Barrierebildung besonders ausgeprägt ist. Andererseits kann für die erfindungsgemäße Silikon-Schraubdeckeldichtung auch ein pulvriger anorganischer Füllstoff ohne Plättchenstruktur verwendet werden, insbesondere Quarzmehl, Aluminiumhydroxid, Talkum. Diese Füllstoffe können auch zusätzlich zum Glimmer und zu dem organischen Gleitfüllstoff in der erfindungsgemäßen Silikondichtung enthalten sein.

Für die genannte Ausbildung der Barriereschicht bedeutsam ist ferner, daß der Füllstoff in ausreichender Menge in der Silikondichtung enthalten ist. Der Anteil des organischen Gleitfüllstoffs beträgt zweckmäßig mindestens 5 Gew.-%, bezogen auf den Gewichtsanteil des Silikonpolymers, und liegt höchstens bei 50 Gew.-%. Falls der bei der erfindungsgemäßen Silikondichtung verwendete Füllstoff sowohl aus organischem Gleitfüllstoff als auch aus anorganischem Füllstoff besteht, so ist der Anteil an anorganischem Füllstoff zweckmäßig größer als derjenige des organischen Gleitfüllstoffs. Der Anteil an anorganischem Füllstoff kann, bezogen auf den Gewichtsanteil des Silikonpolymers, zwischen 30 und 200 Gew.-%, betragen.

Die erfindungsgemäße Schraubdeckeldichtung kann aus einer ungeschäumten Silikonelastomerdichtung bestehen, aber auch eine geschäumte Silikondichtung sein, und zwar insbesondere dann, wenn vor allem bei im Füllvolumen größeren Verpackungsbehältern eine größere Volumenmasse der Silikondichtung zur Verfügung stehen muß, um größere Maßtoleranzen ausgleichen zu können.

Die erfindungsgenmäße Schraubdeckel-Silikondichtung läßt sich in verfahrensmäßig einfach zu beherrschender Weise dadurch herstellen, daß die Silikon-Reaktionsmasse mit einem Inhibitor, wie vorzugsweise Cyklohexanolderivat, versetzt als einkomponentige Spritzmasse in die Deckelnut eingespritzt und unter Erwärmung, z.B. in einem Durchlauftrockner, zur Reaktion gebracht wird, wobei zweckmäßig die Erwärmung bei einer Temperatur von etwa 150° bis 200°C über eine Aushärtungszeit von 0,5 bis 10 Minuten durchgeführt wird. Mit dieser Verfahrensweise läßt sich eine ungeschäumte Silikonelastomerdichtung für Schraubdeckelverschlüsse in verfahrenmäßig einfacher Weise herstellen. Ist eine geschäumte Schraubdeckel-Silikondichtung gefordert, so kann das vorgenannte Verfahren mit Vorteil so durchgeführt werden, daß das einkomponentige Reaktionsgemisch mit, vorzugsweise 5 bis 15 Volumen-% Luftgas in gelöster Form versetzt wird, bevor es unter Wärmezufuhr zur Reaktion gebracht wird. Bei der Erwärmung und Aushärtung entweicht die im Reaktionsgemisch gelöste Luft und bewirkt damit die Porenbildung im erzeugten Silikondichtungsschaum.

Andererseits kann die Herstellung der erfindungsgemäßen Schraubdeckeldichtung aber auch im zweikomponentigen Verfahren erfolgen, wobei die beiden Komponenten, vorzugsweise im Mischungsverhältnis 1:1 miteinander vermischt, mittels einer Zweikomponenten-Misch- und Dosieranlage im Niederdruckschäumverfahren verarbeitet und in die Deckelnut eingebracht werden und hier in situ bei Raumtemperatur oder bei erhöhter Temperatur von 70° bis 150°C zur Aushärtung gebracht werden.

Es kann sich im übrigen empfehlen, zur Verbesserung der Haftung der Silikondichtung am Sitz der Dichtung einen haftungsvorbereitenden Lackuntergrund od.dgl. vorzusehen.

Im folgenden werden einige vorteilhafte Beispiele für die erfindungsgemäßen Silikon-Schraubdeckeldichtungen und deren Herstellungsweise angegeben.

### Beispiel 1

Eine ungeschäumte Silikonelastomerdichtung wird im Einkomponenten-Verfahren nach folgender Rezeptur hergestellt:
100 Gewichtsteile Polydimetylvinylsiloxan (Silikonharz)
0,2 Gewichtsteile organischer Platinkomplex (Katalysator)
0,2 Gewichtsteile Cyklohexanolderivat (Inhibitor)
5 Gewichtsteile Polydimetylhydrogensiloxan (Vernetzungsmittel)
0-2 Gewichtsteile Titandioxidpaste (Weißpigment)
10 Gewichtsteile Polyethylenpulver (organischer Gleitfüllstoff)
30 Gewichtsteile Muskovit-Glimmer (anorganischer Füllstoff)

Das nach vorgenannter Rezeptur hergestellte Reaktionsgemisch hat eine Viskosität von 5000 bis 10000 mPa x s bei 20°C innerhalb von mindestens 3 Monaten. Die nach der Rezeptur hergestellte einkomponentige Silikonmasse wird in die Deckelnut der Schraubdeckel eingespritzt und innerhalb von z.B. fünf Minuten bei einer Temperatur von 150° bis 180°C ausgehärtet, vorzugsweise in einem Durchlauftrockner. Es entsteht eine ungeschäumte Silikonelastomerdichtung von hoher Qualität.

### Beispiel 2

Eine einkomponentig hergestellte geschäumte Silikon-Schraubdeckeldichtung wird nach der im Beispiel 1 angegebenen Rezeptur hergestellt. Dabei wird das Reaktionsgemisch mit z.B. 10 Vol.-% Luftgas (als Treibmittel) gefüllt. Dies kann dadurch geschehen, daß das Reaktionsgemisch in einem Druckbehälter, in den Luft unter Druck eingeführt wird, verrührt wird, so daß die Luft sich im Reaktionsgemisch löst. Das so mit der gelösten Luft angereicherte Reaktionsgemisch wird dann, wie im Beispiel 1 angegeben, verarbeitet.

### Beispiel 3

Eine Silikon-Schaumdichtung für Schraubdeckelverschlüsse wird nach dem Zweikomponenten-Verfahren entsprechend folgender Rezeptur hergestellt:

### Komponente A

100 Gewichts-% Polydimetylvinylsiloxan (Silikonharz)
0,2 Gewichts-% organischer Platinkomplex (Katalysator)
0-2 Gewichts-% Titandioxydpaste (Weißpigment)
15 Gewichts-% Polyethylenpulver (organischer Gleitfüllstoff)
100 Gewichtsteile Quarzmehl (anorganischer Füllstoff)
0,2 Gewichts-% Wasser (Treibmittel)

### Komponente B

100 Gewichts-% Polydimetylvinylsiloxan (Silikonharz)
10 Gewichts-% Polydimetylhydrogensiloxan (Vernetzer)
15 Gewichts-% Polyethylen (organischer Gleitfüllstoff)
100 Gewichtsteile Quarzmehl (anorganischer Füllstoff)

Die vorgenannten Komponenten A und B werden im Mischungsverhältnis 1:1 mittels einer Zweikomponenten-Misch- und Dosieranlage im Niederdruckverschäumungsverfahren vermischt und das Reaktionsgemisch in die Deckelnut der Schraubdeckel eingetragen. Das Reaktionsgemisch härtet bei Raumtemperatur von 20° bis 25°C innerhalb von 20 Minuten zu einer klebfreien Silikondichtung aus. Vorzugsweise erfolgt auch hier eine kurzfristige Aushärtung bei erhöhter Temperatur von etwa 70° bis 120°C, um eine möglichst rasche Klebfreiheit der Silikondichtung zu erreichen.

### Beispiel 4:

Eine ungeschäumte Silikonelastomerdichtung für Schraubdeckel wird nach dem Zweikomponenten-Verfahren auf der Basis der im Beispiel 3 angegebenen Rezeptur hergestellt, wobei auf den Zusatz des Wassers als Treibmittel in der Komponente A verzichtet und der Vernetzeranteil in der Komponente B auf 6 Gewichts-% reduziert wird. Im übrigen erfolgt die Arbeitsweise mittels der Zweikomponenten-Misch- und Dosieranlage entsprechend dem Beispiel 3.

Im Hinblick auf die an die Haftung der Silikondichtung gestellten hohen Anforderungen empfiehlt es sich, am Sitz (Deckelnut) der Silikondichtung einen die Haftung verbessernden Lackuntergrund aufzubringen.

Wie erwähnt, werden bei der erfindungsgemäßen Silikondichtung für die organischen Gleitfüllstoffe Polyolefin, vorzugsweise Polyethylen, und/oder Polyamid in pulvriger Form oder in etwa wachsartiger, d.h. leicht streckbarer und verstreichbarer Form verwendet, die gegenüber den pulvrigen Gleitfüllstoffen ein entsprechend kleineres Molekulargewicht aufweisen. Die Korngröße bzw. Teilchengröße der organischen Gleitfüllstoffe sowie des oder der anorganischen Füllstoffe beträgt zweckmäßig unter 50µm. Als anorganischer Füllstoff, wird, wie angegeben, bevorzugt Glimmer verwendet, zweckmäßig zusammen mit mindestens einem weiteren anorganischen Füllstoff, wie insbesondere Quarzmehl, Aluminiumhydroxid, Talkum u.dgl., obwohl diese Füllstoffe, einzeln oder in Kombination, auch ohne Glimmer bei entsprechender Mengendosierung zur Anwendung kommen können.

Es versteht sich, daß die in den obigen Beispielen angegeben Mengenanteile innerhalb gewisser Grenzen variieren können. Dabei kann die Menge an organischem Gleitfüllstoff zwischen 5 und 50 Gewichts-%, bezogen auf den Gewichtsanteil an verwendetem Silikonpolymer, betragen, während der Mengenanteil an anorganischem Füllstoff 30 bis 200 Gewichts-%, bezogen auf das Silikonpolymer, betragen kann. Die Mengenanteile an den genannten Füllstoffen sind im übrigen so zu wählen, daß eine gute Verarbeitbarkeit der Silikonreaktionsmasse durch Einspritzen in die Deckelnut der Schraubdeckel gegeben ist, wobei die Viskosität der Silikonreaktionsmasse bei 5000 bis 10000 mPa x s liegen sollte.

Die erfindungsgemäßen geschäumten Silikondichtungen sollten vor allem dann vorgesehen werden, wenn bei größeren Verpackungsgefäßen und entsprechend größeren Schraubdeckeln eine größere Volumenmasse der Dichtung gefordert ist.

Wie erwähnt, ist die erfindungsgemäße Schraubdeckel-Silikondichtung mit besonderem Vorteil für die sterile Verpackung von Lebensmitteln verwendbar, da sie aufgrund ihres überlegenen elastischen Rückstellvermögens und der damit gegebenen Funktionssicherheit und aufgrund ihrer Chemikalienbeständigkeit für die sterile Verpackung von Lebensmitteln besonders geeignet ist. Im übrigen zeichnet sich die Silikondichtung durch einfache Verarbeitung aus. Sie ist, wie erwähnt, toxikologisch wie auch ökologisch, da frei von Halogenen, unbedenklich. Der organische Gleitfüllstoff in der Silikondichtung erleichtert auch das Öffnen des Schraubdeckels bei vakuum-verpackten Erzeugnissen und trägt, wie erwähnt, zu der Barrierebildung bei, vorzugsweise in Kombination mit mindestens einem anorganischen Füllstoff, wie insbesondere Glimmer.

## Patentansprüche

1. Schraubdeckeldichtung für luftdicht verpackte Erzeugnisse, insbesondere Lebensmittel, bestehend aus einer einen Füllstoff enthaltenen, durch den Schließdruck des Schraubdeckels elastisch verformbaren Kunststoffdichtung, **dadurch gekennzeichnet, daß** die Schraubdeckeldichtung aus einer elastomeren Silikondichtung besteht, die ein bei ihrer Druckverformung eine Barriere gegen Gasdurchtritt bildendes Füllstoffgemisch aus anorganischem Füllstoff und organischem Gleitfüllstoff enthält, wobei der organische Gleitfüllstoff aus einem Polyolefin, vorzugsweise Polyethylen, und/oder Polyamid in pulvriger oder wachsartiger Form besteht und, bezogen auf den Gewichtsanteil des Silikonpolymers, in einem Anteil von mindestens 5-Gew.%, vorzugsweise zwischen 5-Gew.% und 50-Gew.%, in der Silikondichtung enthalten ist.

2. Schraubdeckeldichtung nach Anspruch 1, **dadurch gekennzeichnet, daß** die Silikondichtung als pulvrigen anorganischen Füllstoff einen solchen mit blättriger Struktur, vorzugsweise Glimmer, enthält.

3. Schraubdeckeldichtung nach Anspruch 1 oder 2, **dadurch gekennzeichnet, daß** die Silikondichtung mindestens einen organischen Gleitfüllstoff und mindestens einen anorganischen Füllstoff enthält.

4. Schraubdeckeldichtung nach einem der Ansprüche 1 bis 3, **dadurch gekennzeichnet, daß** die Silikondichtung als anorganischen Füllstoff Quarzmehl, Aluminiumhydroxyd, Talkum, einzeln oder in Kombination, enthält.

5. Schraubdeckeldichtung nach einem der Ansprüche 1 bis 4, **dadurch gekennzeichnet, daß** der Mengenanteil an anorganischem Füllstoff in der Silikondichtung größer ist als derjenige des organischen Gleitfüllstoffs.

6. Schraubdeckeldichtung nach einem der Ansprüche 1 bis 5, **dadurch gekennzeichnet, daß** der Mengenanteil an anorganischem Füllstoff, bezogen auf den Gewichtsanteil des Silikonpolymers, zwischen 30 und 200 Gew.-% beträgt.

7. Schraubdeckeldichtung nach einem der Ansprüche 1 bis 6, **dadurch gekennzeichnet, daß** sie aus einer ungeschäumten Silikondichtung besteht.

8. Schraubdeckeldichtung nach einem der Ansprüche 1 bis 6, **dadurch gekennzeichnet, daß** sie aus einer geschäumten Silikondichtung besteht.

9. Verfahren zur Herstellung einer Schraubdeckel-Silikondichtung nach einem oder mehreren der Ansprüche 1 bis 8, **dadurch gekennzeichnet, daß** die Silikon-Reaktionsmasse mit einem Inhibitor, wie vorzugsweise Cyklohexanolderivat, versetzt als einkomponentige Spritzmasse in die Deckelnut eingespritzt und unter Erwärmung, z.B. in einem Durchlauftrockner, zur Reaktion gebracht wird.

10. Verfahren nach Anspruch 9, **dadurch gekennzeichnet, daß** die Erwärmung bei einer Temperatur von 150° bis 200°C bei einer Aushärtungszeit von 0,5 bis 10 Minuten durchgeführt wird.

11. Verfahren nach Anspruch 9 oder 10, **dadurch gekennzeichnet, daß** eine ungeschäumte Silikondichtung mit einkomponentiger Verarbeitung nach folgender Rezeptur hergestellt wird:
100 Gew.-% Silikonharz, wie insbesondere Polydimethylvinylsiloxan
mindestens 0,2 Gew.-% organischer Platinkomplex (Katalysator)
mindestens 02, Gew.-% Inhibitor, insbesondere Cyklohexanolderivat
0 bis 2 Gew.-% Pigment, insbesondere Titandioxydpaste (Weißpigment)
mindestens 5 Gew.-5, vorzugsweise 5 bis 15 Gew.-% organischer Gleitfüllstoff, insbesondere Polyethylenpulver
mindestens 20 Gew.-%, vorzugsweise 20 bis 40 Gew.-% anorganischer Füllstoff, insbesondere pulvriger Glimmer.

12. Verfahren nach Anspruch 11, **dadurch gekennzeichnet, daß** zur Herstellung einer geschäumten Silikondichtung das einkomponentige Reaktionsgemisch mit, vorzugsweise 5 bis 15 Volumen-%, Luftgas in gelöster Form versetzt wird, bevor es unter Wärmezufuhr zur Reaktion und Aushärtung gebracht wird.

13. Verfahren zur Herstellung einer Schraubdeckeldichtung nach einem oder mehreren der Ansprüche 1 bis 8, **dadurch gekennzeichnet, daß** die elastomere Deckeldichtung aus einer zweikomponentigen Silikonmasse hergestellt wird, deren beide Komponenten A und B, vorzugsweise im Mischungsverhältnis 1:1 vermischt mittels einer Zweikomponenten-Misch- und Dosieranlage im Niederdruckschäumverfahren verarbeitet und in die Deckelnut eingebracht und hier in Situ bei Raumtemperatur oder bei erhöhter Temperatur von 70 bis 150°C zur Aushärtung gebracht werden.

14. Verfahren nach Anspruch 13, **dadurch gekennzeichnet, daß** eine geschäumte Silikondichtung aus folgenden Komponenten hergestellt wird:
Komponente A:
100 Gew.-% Polydimethylvinylsiloxan (Silikonharz) mindestens 0,2 Gew.-% organischer Platinkomplex
0 bis 2 Gew.-% Titandioxidpaste (Weißpigment)
10 bis 20 Gew.-%, vorzugsweise 15 Gew.-% organischer Gleitfüllstoff, insbesondere Polyethylenpulver
50 bis 150 Gew.-%, vorzugsweise 100 Gew.-% Quarzmehl
mindestens 0,2 Gew.-% Wasser (Treibmittel)
Komponente B:
100 Gew.-% Polydimethylvinylsiloxan (Silikonharz) mindestens 5 bis 15 Gew.-%, vorzugsweise 10 Gew.-% Polydimethylhydrogensiloxan (Vernetzer)
5 bis 20 Gew.-%, vorzugsweise 15 Gew.-% organischer Gleitfüllstoff, vorzugsweise Polyethylen
50 bis 150 Gew.-%, vorzugsweise 100 Gew.-% Quarzmehl, wobei die vorgenannten Komponenten A und B im Mischungsverhältnis 1:1 mittels einer Zweikomponenten-Misch- und Dosieranlage im Niederdruckverschäumgsverfahren verarbeitet werden und das Reaktionsgemisch in die Deckelnut eingetragen und hier, vorzugsweise bei einer Aushärtungstemperatur von etwa 70° bis 120°C zur Aushärtung gebracht wird.

15. Verfahren nach Anspruch 13 und 14, **dadurch gekennzeichnet, daß** eine ungeschäumte Silikondichtung im zweikomponentigen Verfahren dadurch hergestellt wird, daß der Komponente A nach Anspruch 15 kein Wasser als Treibmittel zugesetzt wird und der Vernetzeranteil in der Komponente B, vorzugsweise auf 6 Gew.-%, reduziert wird.

16. Verfahren nach einem der Ansprüche 9 bis 15, **dadurch gekennzeichnet, daß** zur Verbesserung der Haftung der Silikondichtung der Deckel am Sitz der Dichtung mit einem haftungsvorbereitenden Lackuntergrund versehen wird.

## Claims

1. Screw-lid seal for airtight packed products, in particular foodstuffs, comprising a plastic seal which contains a filler material and is elastically reshapeable by the closing pressure of the screw-lid, **characterised in that** the screw-lid seal is made of an elastomer silicon seal containing a mixture of inorganic filler material and organic sliding filler material which during its reshaping by pressure forms a barrier against passing of gas, and the organic sliding filler material is composed of a polyolefine, preferably polyethylene, and/or polyamide in powdered or waxlike form and contained in the silicon seal at a ratio of at least 5 %-weight, preferably between 5 %-weight and 50 %-weight, relative to the weight proportion of the silicon polymer.

2. Screw-lid seal according to Claim 1, **characterised in that** the silicon seal contains a powdered inorganic filler material of leafy structure, preferably glimmer.

3. Screw-lid seal according to Claim 1 or 2, **characterised in that** the silicon seal contains at least one organic sliding filler material and at least one inorganic filler material.

4. Screw-lid seal according to one of Claims 1 to 3, **characterised in that** the silicon seal contains, individually or a in combination, inorganic filler material in the form of quartz powder, aluminiumhydroxide, talcum.

5. Screw-lid seal according to one of Claims 1 to 4, **characterised in that** the proportion in volume of inorganic filler material in the silicon seal is higher than that of the organic sliding filler material.

6. Screw-lid seal according to one of Claims 1 to 5, **characterised in that** the proportion in volume of inorganic filler material lies between 30 and 200 %-weight relative to the weight proportion of the silicon polymer.

7. Screw-lid seal according to one of Claims 1 to 6, **characterised in that** it is composed of an unfoamed silicon seal.

8. Screw-lid seal according to one of Claims 1 to 6, **characterised in that** it is composed of a foamed silicon seal.

9. Process for manufacturing a screw-lid silicon seal according to one or more of Claims 1 to 8, **characterised in that** to the silicon reaction mass is added an inhibitor, such as preferably cyclohexanol derivative, and as a single component injection mass injected into the lid groove and caused to react by heating, for example in a continuous drier.

10. Process according to Claim 9, **characterised in that** heating is carried out at a temperature between 150° and 200°C with a hardening period between 0.5 and 10 minutes.

11. Process according to Claim 9 or 10, **characterised in that** an unfoamed silicon seal with single component processing is produced according to the following prescription:
100 %-weight silicon resin, such as in particular polydimethylvinylsiloxane;
at least 0.2 %-weight organic platinum complex (catalyst);
at least 0.2 %-weight weight inhibitor, in particular cyclohexanol derivative;
0 - 2 %-weight pigment, in particular titaniumdioxide paste (white pigment);
at least 5 %-weight, preferably between 5 and 15 %-weight organic sliding filler material, in particular polyethylene powder;
at least 20 %-weight, preferably between 20 and 40 %-weight, inorganic filler material, in particular powdered glimmer.

12. Process according to Claim 11, **characterised in that** a foamed silicon seal is manufactured by adding to the single component reaction mixture preferably between 5 and 15 %-vol. air gas in a dissolved form prior to reaction and hardening by delivery of heat.

13. Process for the manufacture of a screw-lid seal according to one or more of Claims 1 to 8, **characterised in that** the elastomer cover seal is made of a two component silicon mass the two components A and B of which are mixed, preferably at a mixing ratio of 1:1 and by means of a two-component mixing and apportioning unit, in a low-pressure foaming process and delivered into the lid groove where it is in situ hardened at room temperature or at an increased temperature between 70 and 150°C.

14. Process according to Claim 13, **characterised in that** a foamed silicon seal is made of the following components:
Component A:
100 %-weight polydimethylvinylsiloxane (silicon resin);
at least 0.2 %-weight organic platinum complex;
between 0 and 2 %-weight titaniumdioxide paste (white pigment);
between 10 and 20 %-weight, preferably 15 %-weight, organic sliding filler material, in particular polyethylene powder;
between 50 and 150 %-weight, preferably 100 %-weight, quartz powder;
at least 0.2 %-weight water (foaming agent).
Component B:
100 %-weight polydimethylvinylsiloxane (silicon resin);
at least between 5 and 15 %-weight, preferably 10 %-weight, polydimethylhydrogenesiloxane (cross-linking agent);
between 5 and 20 %-weight, preferably 15 %-weight, organic sliding filler material, preferably polyethylene;
between 50 and 150 %-weight, preferably 100 %-weight, quartz powder;
where the aforementioned components A and B are processed at a mixing ratio 1:1 by means of a two component mixing and apportioning unit in a low pressure foaming process, and the reaction mixture is delivered into the lid groove where it is hardened, preferably at a hardening temperature of approximately between 70° and 120°C.

15. Process according to Claim 13 and 14, **characterised in that** an unfoamed silicon seal is manufactured in a two component process in that according to Claim 14 no water is added as propellant to component A and the cross-linking proportion in component B is reduced, preferably to 6 %-weight.

16. Process according to one of Claims 8 to 15, **characterised in that** the lid is at the seat of the seal provided with a pre-adhesion lacquer base in order to improve adhesion of the silicon seal.

## Revendications

1. Joint d'étanchéité pour couvercle fileté pour produits conditionnés d'une manière étanche à l'air, en particulier des produits alimentaires, constitué d'un joint en plastique, contenant une charge, pouvant subir une déformation élastique sous l'effet de la pression de fermeture du couvercle fileté, caractérisé en ce que le joint de couvercle fileté est constitué d'un joint de silicone élastomère, qui contient un mélange de charges, constitué d'une charge inorganique et d'une charge lubrifiante organique, ce mélange formant sous l'effet de sa déformation par compression une barrière contre le passage des gaz, la charge lubrifiante organique étant constituée d'une polyoléfine, de préférence le polyéthylène, et/ou d'un polyamide sous forme pulvérulente ou cireuse, et est présente dans le joint de silicone selon une proportion, rapportée au poids du polymère de silicone, d'au moins 5 % en poids et de préférence de 5 à 50 % en poids.

2. Joint de couvercle fileté selon la revendication 1, caractérisé en ce que le joint de silicone contient en tant que charge inorganique en poudre une charge de ce type ayant une structure lamellaire, de préférence de mica.

3. Joint de couvercle fileté selon la revendication 1 ou 2, caractérisé en ce que le joint de silicone contient au moins une charge lubrifiante organique et au moins une charge inorganique.

4. Joint de couvercle fileté selon l'une des revendications 1 à 3, caractérisé en ce que le joint de silicone contient en tant que charge inorganique de la poudre de quartz, de l'hydroxyde d'aluminium, du talc, à titre individuel ou en combinaison.

5. Joint de couvercle fileté selon l'une des revendications 1 à 4, caractérisé en ce que la proportion pondérale de la charge inorganique dans le joint de silicone est supérieure à celle de la charge lubrifiante organique.

6. Joint de couvercle fileté selon l'une des revendications 1 à 5, caractérisé en ce que la proportion pondérale de la charge inorganique, rapportée au poids du polymère de silicone, est de 30 à 200 % en poids.

7. Joint de couvercle fileté selon l'une des revendications 1 à 6, caractérisé en ce qu'il est constitué d'un joint de silicone non expansé.

8. Joint de couvercle fileté selon l'une des revendications 1 à 6, caractérisé en ce qu'il est constitué d'un joint de silicone expansé.

9. Procédé de fabrication d'un joint de silicone pour couvercle fileté selon l'une ou plusieurs des revendications 1 à 8, caractérisé en ce que la masse réactionnelle de silicone est additionnée d'un inhibiteur, tel de préférence qu'un dérivé du cyclohexanol, servant de masse d'injection mono-composant, injectée dans la gorge du couvercle, et est mise à réagir en présence d'un chauffage, par exemple dans un séchoir à passage direct.

10. Procédé selon la revendication 9, caractérisé en ce que le chauffage est réalisé à une température de 150 à 200°C pour un temps de durcissement de 0,5 à 10 minutes.

11. Procédé selon la revendication 9 ou 10, caractérisé en ce qu'on prépare un joint de silicone non expansé par le procédé à un composant, selon la formulation suivante :
100 % en poids d'une résine de silicone, telle en particulier que le polydiméthylvinylsiloxane,
au moins 0,2 % en poids d'un complexe organique du platine (catalyseur),
au moins 0,2 % en poids d'un inhibiteur, en particulier un dérivé du cyclohexanol,
de 0 à 2 % en poids d'un pigment, en particulier une pâte de dioxyde de titane (pigment blanc),
au moins 5 % en poids, de préférence de 5 à 15 % en poids d'une charge lubrifiante organique, en particulier une poudre de polyéthylène,
au moins 20 % en poids, de préférence de 20 à 40 % en poids d'une charge inorganique, en particulier du mica en poudre.

12. Procédé selon la revendication 11, caractérisé en ce que, pour fabriquer un joint de silicone expansé, le mélange réactionnel à un composant est additionné de gaz d'air sous forme dissoute, de préférence en une quantité de 5 à 15 % en volume, avant d'être mis à réagir et à durcir par apport de chaleur.

13. Procédé de fabrication d'un joint de couvercle d'étanchéité selon l'une ou plusieurs des revendications 1 à 8, caractérisé en ce que le joint de couvercle élastomère est fabriqué à partir d'une masse de silicone à deux composants, dont les deux composants A et B sont, de préférence après mélange selon un rapport de mélange de 1:1, mis en oeuvre à l'aide d'une installation de mélange et de dosage à deux composants par le procédé d'expansion sous basse pression, et est introduit dans la gorge de couvercle, pour y être mis à durcir in situ à la température ambiante ou à une température élevée, de 70 à 150°C.

14. Procédé selon la revendication 13, caractérisé en ce qu'on fabrique un joint de silicone expansé à partir des composants suivants :
Composant A
100 % en poids de polydiméthylvinylsiloxane (résine de silicone),
au moins 0,2 % en poids d'un complexe organique du platine,
de 0 à 2 % en poids d'une pâte de dioxyde de titane (pigment B),
de 10 à 20 % en poids, de préférence 15 % en poids d'une charge lubrifiante organique, en particulier une poudre de polyéthylène,
de 50 à 150 % en poids, de préférence 100 % en poids de poudre de quartz, au moins 0,2 % en poids d'eau (agent porogène).
Composant B
100 % en poids de polydiméthylvinylsiloxane (résine de silicone),
au moins 5 à 15 % en poids, de préférence 10 % en poids de polydiméthylhydrogénosiloxane (agent de réticulation),
de 5 à 20 % en poids, de préférence 15 % en poids de charge lubrifiante organique, de préférence le polyéthylène,
de 50 à 150 % en poids, de préférence 100 % en poids de poudre de quartz,
où les composants A et B mentionnés ci-dessus sont mis en oeuvre selon un rapport de mélange de 1:1 à l'aide d'une installation de mélange et de dosage à deux composants par le procédé d'expansion sous basse pression, le mélange réactionnel étant introduit dans la gorge de couvercle, pour y être mis à durcir de préférence à une température de durcissement d'environ 70 à 120°C.

15. Procédé selon les revendications 13 et 14, caractérisé en ce qu'on fabrique un joint de silicone non expansé par un procédé à deux composants, sans ajouter d'eau en tant qu'agent porogène au composant A selon la revendication 14, et en réduisant de préférence à 6 % en poids la proportion d'un agent de réticulation dans le composant B.

16. Procédé selon l'une des revendications 9 à 15, caractérisé en ce que, pour améliorer l'adhérence du joint de silicone, le couvercle est, sur le siège du joint d'étanchéité, pourvu d'un fond de peinture promoteur d'adhérence.
